# EUROPÄISCHE PATENTSCHRIFT

(11) **EP 0 627 048 B1**
(45) Veröffentlichungstag und Bekanntmachung des Hinweises auf die Patenterteilung: **19.06.1996**
(21) Anmeldenummer: 93903824.6
(22) Anmeldetag: 18.02.1993
(51) Int. Cl.: F16C 17/10, F16C 33/04

(54) **ZUSAMMENGESETZTES RADIAL-AXIAL-GLEITLAGER**
COMPOSITE RADIAL-AXIAL PLAIN BEARING
PALIER COMPOSE A GLISSEMENT RADIAL-AXIAL

(30) Priorität: 19.02.1992 DE 4204988; 10.02.1993 DE 4303855
(43) Veröffentlichungstag der Anmeldung: 07.12.1994
(73) Patentinhaber: GLYCO-METALL-WERKE Glyco B.V. & Co. KG, D-65091 Wiesbaden-Schierstein (DE)
(72) Erfinder: BRANDT, Horst, D-6108 Weiterstadt (DE)
(86) Internationale Anmeldenummer: DE9300161
(87) Internationale Veröffentlichungsnummer: WO9317250

(56) Entgegenhaltungen:
- EP-A- 0 184 693
- EP-B- 298 953
- DE-A- 4 041 557
- DE-C- 3 933 667
- GB-A- 2 134 189
- GB-A- 2 241 752

## Beschreibung

Die Erfindung betrifft ein zusammengesetztes Radial-Axial-Gleitlager mit halbschalenförmigem oder buchsenförmigem Radiallagerteil und einseitig oder beidseitig angesetztem, teilringförmigem Axiallagerteil oder Satz von Axiallagerteilen, wobei jedes Axiallagerteil mindestens zwei Haltelaschen an seiner inneren Umfangskante aufweist, die jeweils in eine im Bereich des bogenförmigen oder kreisförmigen Randes des Radiallagerteiles angebrachte Ausnehmung eingreift, wobei mindestens eine Haltelasche als Befestigungslasche mit mindestens einem Spreizfinger flankiert ist, der in eine in der zugeordneten Befestigungsausnehmung des Radiallagerteiles gebildete Hinterschneidung greift. Die Erfindung betrifft auch ein Gleitlager nach dem Oberbegriff von Anspruch 10.

Zusammengesetzte Radial-Axial-Gleitlager sind aus einer Vielzahl von Vorveröffentlichungen bekannt. Sie haben gegenüber einem einstückig ausgebildeten Radial-Axial-Gleitlager (Bundlager) den Vorteil, daß für das Radiallagerteil ein anderer Werkstoff als für das Axiallagerteil gewählt werden kann und so eine optimale Werkstoffanpassung an die jeweiligen Belastungsverhältnisse möglich ist. Um den Verschleiß der Lagerteile bei zusammengesetzten Radial-Axial-Gleitlagern gering zu halten, ist die Zentrierung und Fixierung der Lagerteile zueinander von großer Bedeutung, wobei eine gewisse Beweglichkeit des Axiallagerteiles gegenüber dem Radiallagerteil allein schon zur Montage des Gleitlagers erwünscht ist.

Aus EP-B-298 953 ist ein solches aus Lagerhalbschale und gesondertem Anlaufbund zusammengesetztes Radial-Axial-Gleitlager bekannt, bei welchem zur Befestigung des Anlaufbundes an der Lagerhalbschale diese mit zum Außenrand hin offenen Einsteckausnehmungen versehen ist, die eine in axialer Richtung wirksame Hinterschneidung in Form eines Schwalbenschwanzes bilden. Entsprechend diesen Einsteckausnehmungen sind am Anlaufbund Befestigungsansätze vorgesehen, die aus in axialer Richtung abgewinkelten Zungen bestehen. Bei diesen bekannten Radial-Axial-Gleitlagern müssen diese Haltelaschen sehr lang sein und mit hoher Präzision umgebogen werden. Um den Anlaufbund mit der Lagerschale zu verbinden, wird der Anlaufbund in radialer Richtung auf die Lagerhalbschale aufgesteckt. Sofern sämtliche Befestigungsansätze den Einsteckausnehmungen entsprechende Schwalbenschwanzform aufweisen, ist es notwendig, die Lagerhalbschale durch Zusammendrücken elastisch so weit zu verformen, daß die Befestigungsansätze in die Befestigungsausnehmungen eingeführt werden können. Abgesehen davon, daß durch diese elastische Verformung Beschädigungen in der Formgebung und der Beschichtung der Lagerhalbschale auftreten können, ist eine solche elastische Verformung überhaupt nur bei Lagerhalbschalen nicht aber bei Lagerbuchsen möglich.

In EP-B-298 953 wird daher auch eine zweite Möglichkeit für das Einsetzen der Befestigungsansätze in die Einsteckausnehmungen in Betracht gezogen dahingehend, daß ein mittlerer Befestigungsansatz zunächst rechteckig und mit vorgebildeten Spreizfingern ausgebildet wird und diese Spreizfinger nach dem Ansetzen des Anlaufbundes an die Lagerhalbschale in die Schwalbenschwanzform der Einsteckausnehmung aufgeweitet werden. Dieses Aufweiten in Schwalbenschwanzform ist bei den umgebogenen Befestigungsansätzen schwierig und bringt die Gefahr von Beschädigungen am Radiallagerteil mit sich. Außerdem bieten die in Schwalbenschwanzform gebogenen Teile eines Befestigungsansatzes nur bedingte Festigkeit und Haltesicherheit, da sie innerhalb der schwalbenschwanzförmigen Einsteckausnehmung nur als keilförmige Halteelemente wirken, die bei relativen Bewegungen des Anlaufbundes gegenüber dem Radiallagerteil verformt und dadurch mehr und mehr in der Einsteckausnehmung gelockert werden.

Aus der nachveröffentlichten älteren deutschen Patentanmeldung DE-A-41 40 277 ist auch bereits ein zusammengesetztes Radial-Axial-Gleitlager bekannt, bei welchem eine als Befestigungslasche dienende Haltelasche des Axiallagerteiles in eine am Umfangsrand des Radiallagerteiles gebildete, geschlossene Halteöffnung gesteckt und nachträglich zu, über das Radiallagerteil übergreifende Nasen geformt ist. Dabei kann eine sichere, dauerhafte Halterung und definierte Begrenzung des axialen Spieles des Axiallagerteiles gegenüber dem Radiallagerteil sichergestellt werden, jedoch erfordert die Ausbildung der Nasen an der Befestigungslasche hohe Präzision und besondere Vorsicht gegen Beschädigung der Lagerteile.

Aufgabe der Erfindung ist es demgegenüber, ein zusammengesetztes Radial-Axial-Gleitlager zu schaffen, mit welchem einerseits die sichere Fixierung des Axiallagerteiles am Radiallagerteil unter definierter Begrenzung der gegenseitigen Beweglichkeit der Lagerteile gewährleistet wird und andererseits ein besonders einfacher Zusammenbau von Axiallagerteil und Radiallagerteil mit nur wenigen einfachen und für die Lagerteile ungefährlichen Arbeitsschritten möglich wird.

Diese Aufgabe wird durch die Merkmale von Anspruch 1 bzw. Anspruch 10 gelöst.

Gegenüber einem Abspreizen von Fingern und Aufweiten einer Befestigungslasche in Schwalbenschwanzform bietet dieses seitliche Abspreizen des Spreizfingers und Einlegen in eine Aufnahmenische den Vorteil, daß Maßhaltigkeit und definierte Begrenzung der Beweglichkeit bereits bei der Vorfertigung der Lagerteile mit erforderlicher hoher Präzision ohne jegliche Schwierigkeit eingerichtet werden können. Das Zusammensetzen von Radiallagerteil und Axiallagerteil und das Abspreizen des Spreizfingers unter Einlegen in die Aufnahmenische sind besonders einfache Arbeitsschritte, die keinerlei elastische Verformung an den Lagerteilen selbst erforderlich machen und keinerlei Beschädigungsgefahr für die Lagerteile bedingen.

Besonders vorteilhaft kann im Rahmen der Erfindung vorgesehen sein, daß der oder die Spreizfinger in Umfangsrichtung des Axiallagerteiles flankierend neben der Befestigungslasche angeordnet und über deren gesamte Länge durch einen Schnitt oder einen Schlitz von der Befestigungslasche getrennt ist bzw. sind. Hierdurch wird das seitliche Abspreizen des bzw. der Spreizfinger besonders einfach und sicher möglich ohne irgendwelche Verformung an der Befestigungslasche selbst vornehmen zu müssen.

Das Axiallagerteil kann im Rahmen der Erfindung eine oder mehrere zusätzliche Haltelaschen als Führungslaschen ohne Spreizfinger aufweisen, welchen jeweils eine zumindest teilweise, vorzugsweise jedoch vollständig, axial geschlossene Halteöffnung am Rand des Radiallagerteiles zugeordnet ist. Solche Führungslaschen verbessern nicht allein den Zusammenhalt der Lagerteile sondern auch die definierte Begrenzung der gegenseitigen Beweglichkeit der Lagerteile.

In einer bevorzugten Ausführungsform der Erfindung weist jedes Axiallagerteil im Scheitelbereich seiner radialen Innenkante eine Führungslasche und zu beiden Seiten in, vorzugsweise gleichem, Winkelabstand je eine Befestigungslasche auf, wobei jede Befestigungslasche zumindest an der von der Führungslasche abgewandten Seite mit einem Spreizfinger flankiert ist. In dieser Ausführungsform werden besonders gute Bedingungen für die gegenseitige Halterung und begrenzte Beweglichkeit von Radiallagerteil und Axiallagerteil erreicht. Der Zusammenbau der Teile zu dem zusammengesetzten Radial-Axial-Gleitlager ist einfach und kostengünstig durchführbar. Um darüber hinaus noch die gegenseitige axiale Beweglichkeit von Axiallagerteil und Radiallagerteil definiert zu begrenzen und die radiale Beweglichkeit des Axiallagerteiles am Radiallagerteil möglichst klein zu halten, kann im Rahmen der Erfindung das Axiallagerteil im Scheitelbereich seiner Innenkante mit einem radialeinwärts gegenüber der Innenkante vorstehenden Widerlagerrand ausgebildet sein, der sich zu beiden Seiten der Führungslasche erstreckt.

Der Widerlagerrand kann auch vorgesehen sein, wenn das Axiallagerteil keine Führungslasche aufweist,wobei sich der Widerlagerrand abschnittweise oder vollständig längs der Innenkante des Axiallagerteils erstreckt. Wenn der Widerlagerrand auch im Bereich des Spreizfingers ausgebildet ist, wird dadurch die Stabilität des Greiffingers erhöht.

Dieser Widerlagerrand legt sich in einem bogenförmigen Bereich an den Rand des Radiallagerteiles an und bietet dadurch im Betrieb eine sichere Abstützung des Axiallagerteiles am Radiallagerteil.

In anderer Ausführungsform der Erfindung kann das Axiallagerteil zu einer Seite seines Scheitelbereiches im Winkelabstand davon eine Haltelasche und zur anderen Seite des Scheitelbereiches im Winkelabstand eine Befestigungslasche aufweisen.

Bei einer weiteren Ausführungsform der Erfindung kann vorgesehen sein, daß das Axiallagerteil zu beiden Seiten jeweils im Winkelabstand von seinem Scheitelbereich je eine Befestigungslasche aufweist. Diese beiden letzteren Ausführungsformen können je nach dem vorgesehenen Einsatzbereich des jeweiligen zusammengesetzten Radial-Axial-Gleitlagers gewählt werden. In diesen beiden letzteren Ausführungsformen kann vorgesehen sein, daß der jeweiligen Befestigungslasche ein Spreizfinger zugeordnet ist, der vorzugsweise an der vom Scheitelbereich des Axiallagerteiles abgewandten Seite der Befestigungslasche angeordnet ist. Eine erhöhte Haltesicherheit des Axiallagerteiles am Radiallagerteil kann bei diesen beiden letzteren Ausführungsformen dadurch vorgesehen sein, daß die Befestigungslasche zu beiden Seiten mit je einem Spreizfinger flankiert ist, von welchen jeder in auseinandergespreizten Zustand in eine Aufnahmenische der die Befestigungslasche aufnehmenden Ausnehmung greift.

Wenn der Spreizfinger in eine eigene Ausnehmung des Radiallagerteils eingreift, werden die in Umfangsrichtung wirkenden Kräfte vornehmlich von der oder den Haltelaschen aufgenommen, so daß der oder die Spreizfinger entlastet werden und ihrer eigentlichen Funktion als Verbindungselement gerecht werden können.

Vorzugsweise werden die Spreizfinger derart angeordnet, daß in den Fällen, in denen der Rand der Ausnehmung an der Haltelasche anliegt, der oder die Spreizfinger immer noch ein Spiel in der zugeordneten Ausnehmung aufweisen, so daß eine Belastung des Spreizfingers in Umfangsrichtung mit Sicherheit ausgeschlossen wird. Dies kann dadurch erreicht werden, daß das Spiel der Spreizfinger in ihrer Ausnehmung größer ist als das Spiel der Haltelaschen in den ihnen zugeordneten Ausnehmungen.

Die Anordnung der Spreizfinger bezüglich der Haltelaschen ist in verschiedener Weise möglich. Je nach Anordnung und Anzahl der Haltelaschen können die Spreizfinger auf einer oder beiden Seiten beabstandet zu der oder den Haltelaschen angeordnet sein. Es ist auch möglich, daß in einer Ausnehmung zwei Spreizfinger vorgesehen sind, die in gespreiztem Zustand jeweils in eine eigene Aufnahmenische eingreifen. Die Aufnahmenischen sind in diesem Fall gegenüberliegend angeordnet. Weitere Ausgestaltungen sind Gegenstand der Unteransprüche.

Ausführungsbeispiele der Erfindung werden im folgenden anhand der Zeichnungen näher erläutert.

Es zeigen:
- Figur 1: eine perspektivische Darstellung des zusammengesetzten Radial-Axial-Gleitlagers einer ersten Ausführungsform;
- Figur 2: eine Draufsicht auf ein Axiallagerteil gemäß Figur 1 vor dem Zusammenbau;
- Figur 3: eine Draufsicht auf ein Axiallagerteil gemäß Figur 1 in zusammengebautem Zustand mit einem Radiallagerteil;
- Figur 3a, b: Detailvergrößerungen gemäß III a bzw. III b aus Figur 3
- Figur 4: eine Ansicht auf ein abgewickeltes Radiallagerteil gemäß Figur 1;
- Figur 5: eine perspektivische Darstellung des zusammengesetzten Radial-Axial-Gleitlagers in einer zweiten Ausführungsform;
- Figur 6: eine Draufsicht auf das Axiallagerteil und am Rand geschnittenem Radiallagerteil bei einem Radial-Axial-Lagerteil gemäß Figur 5;
- Figur 7: eine perspektivische Darstellung des zusammengesetzten Radial-Axial-Gleitlagers in einer weiteren Ausführungsform und
- Figur 8: eine Draufsicht auf das Axiallagerteil mit geschnittenem Rand des Radiallagerteiles bei einem zusammengesetzten Radial-Axial-Gleitlager gemäß Figur 7.
- Figur 9: eine perspektivische Darstellung des zusammengesetzten Radial-Axial-Gleitlagers einer weiteren Ausführungsform;
- Figur 10: eine Draufsicht auf ein Axiallagerteil gemäß Figur 9 vor dem Zusammenbau;
- Figur 11: eine Draufsicht auf ein Axiallagerteil gemäß Figur 9 in zusammengebautem Zustand mit einem Radiallagerteil;
- Figur 11a,b: Detailvergrößerungen gemäß XI a bzw. XI b aus Figur 11
- Figur 12: eine Ansicht auf ein abgewickeltes Radiallagerteil gemäß Figur 9;
- Figur 13: eine perspektivische Darstellung des zusammengesetzten Radial-Axial-Gleitlagers in einer weiteren Ausführungsform;
- Figur 14: eine Draufsicht auf das Axiallagerteil und am Rand geschnittenem Radiallagerteil bei einem Radial-Axial-Lagerteil gemäß Figur 13;
- Figur 15: eine perspektivische Darstellung des zusammengesetzten Radial-Axial-Gleitlagers in einer weiteren Ausführungsform und
- Figur 16: eine Draufsicht auf das Axiallagerteil mit geschnittenem Rand des Radiallagerteiles bei einem zusammengesetzten Radial-Axial-Gleitlager gemäß Figur 15.

Bei den in den Zeichnungen wiedergegebenen Beispielen handelt es sich um ein Radial-Axial-Gleitlager 1, deren Radiallagerteil 3 in Form einer im wesentlichen halbzylindrischen Lagerschale ausgebildet ist. Der Axiallagerteil 2 ist gebildet durch eine einseitig oder beidseitig an den bogenförmigen Stirnrand 7 des Radiallagerteiles 3 angesetzte, halbringförmige Anlaufscheibe. Das Axiallagerteil 2 besitzt an seinem inneren Umfangsrand radial nach innen weisende Befestigungslaschen 5 und Führungslaschen 4, die in entsprechende Ausnehmungen 11, 13 am Rand 7 des Radiallagerteiles 3 greifen.

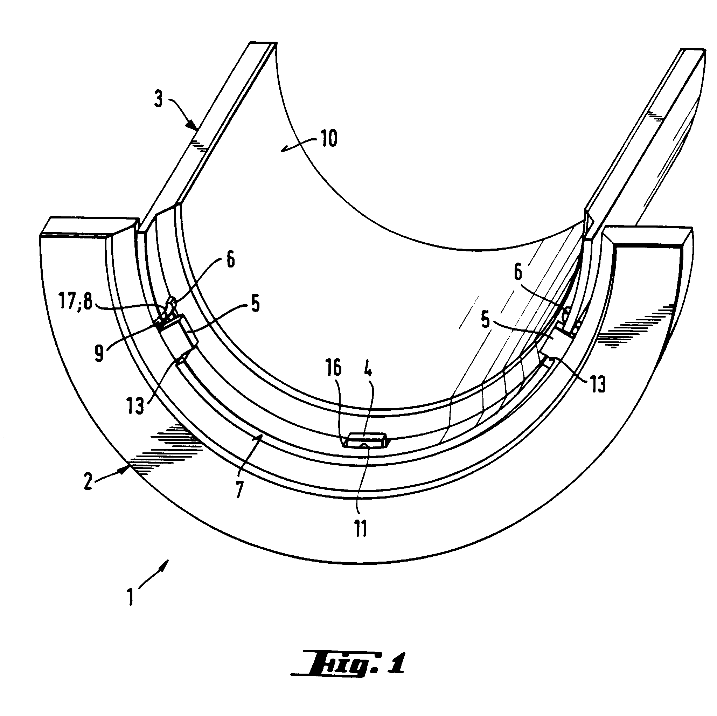

Im Beispiel der Figuren 1 bis 4 ist das Axiallagerteil mit einer mittigen Führungslasche 4 und dazu flankierend in einem Winkelabstand von etwa 30 Grad oder mehr mit zwei Befestigungslaschen 5 versehen. Zwischen der mittigen Führungslasche 4 und den flankierenden Befestigungslaschen 5 ist ein gegenüber dem Innenumfang des Axiallagerteiles 2 vorstehender Wiederlagerrand 15 gebildet. Die Führungslasche 4 greift in eine geschlossene Halteöffnung 11, während für die beiden Befestigungslaschen 5 Befestigungsausnehmungen 13 am Rand 7 des Radiallagerteiles 3 vorgesehen sind. Die Innenkante 11 a der geschlossenen Halteöffnung 11 und die Grundkante 13 a der Befestigungsausnehmungen 13 fluchten miteinander.

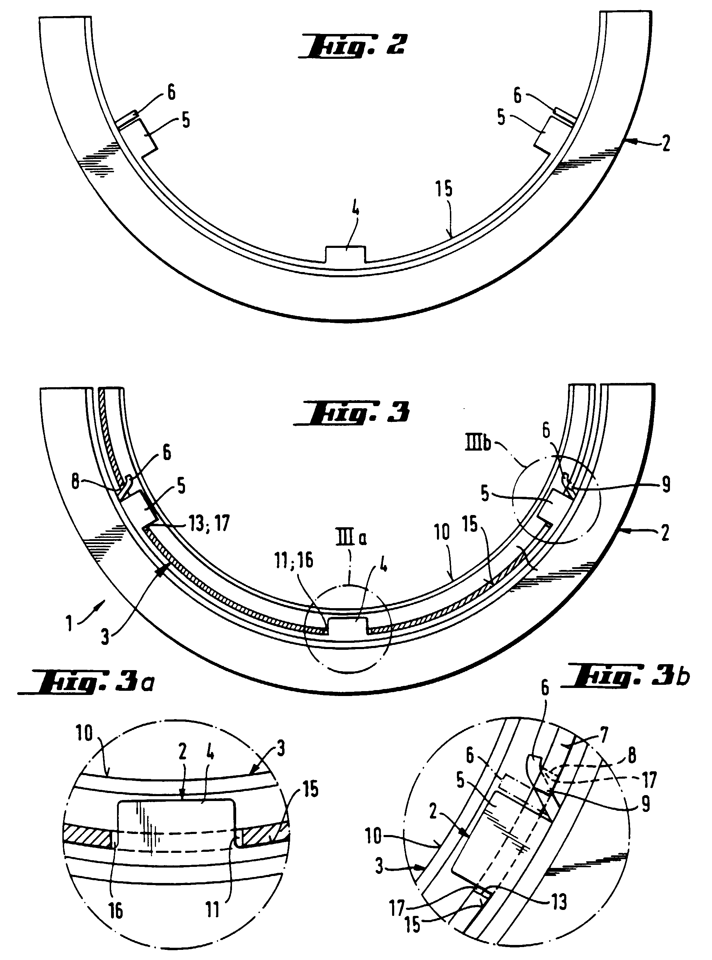

Wie besonders aus Figur 2 ersichtlich, ist jede Befestigungslasche 5 an der der Führungslasche 4 abgewandten Seite mit einem Spreizfinger 6 flankiert. Zwischen dem Spreizfinger 6 und der Befestigungslasche 5 ist ein sich bis an die Basis der Befestigungslasche 5 erstreckender Schlitz gebildet, um zum Abspreizen des Spreizfingers 6 von der Befestigungslasche 5 ein entsprechendes Werkzeug einführen zu können.

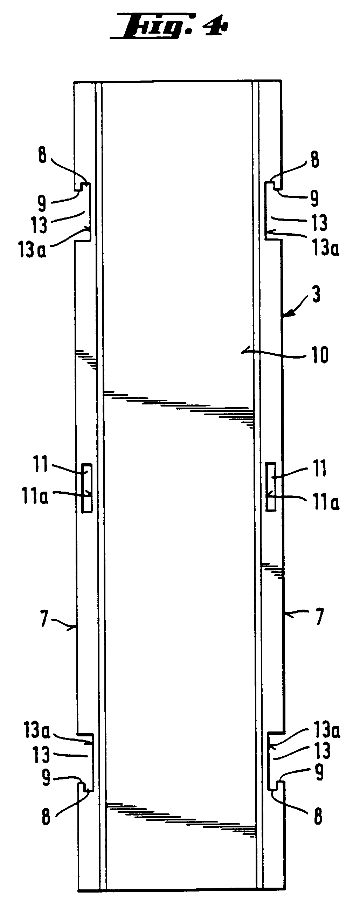

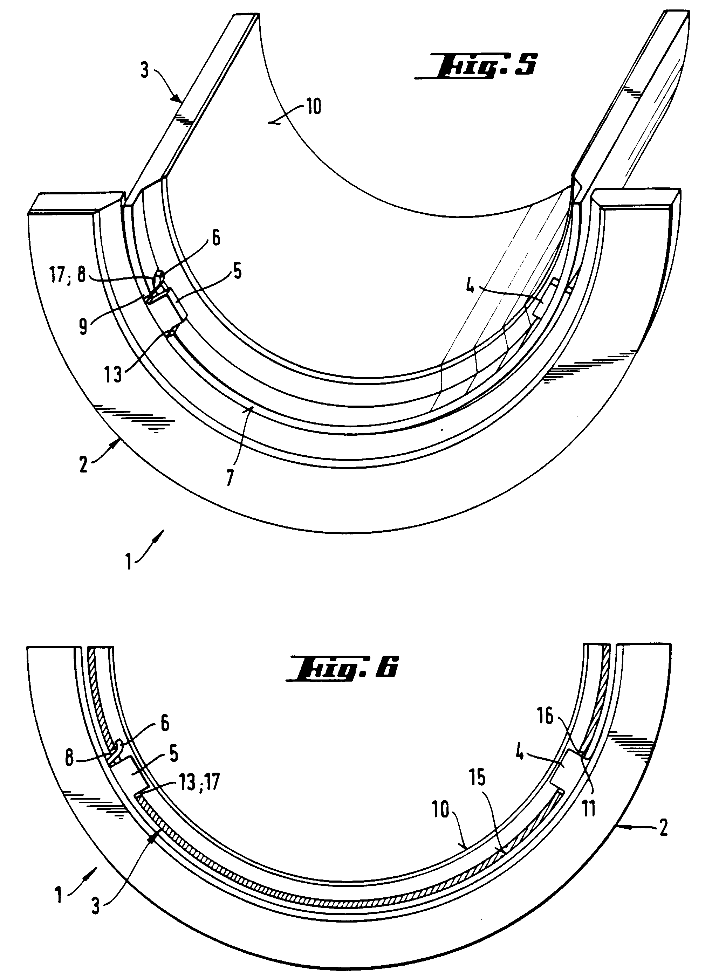

Wie Figur 4 zeigt, weist jede der Befestigungsausnehmungen 13 an ihrem der mittigen, geschlossenen Halteöffnung 11 abgewandten Ende eine Aufnahmenische 8 auf, die axial nach außen durch einen hakenförmigen Vorsprung 9 überdeckt ist derart, daß in der Aufnahmenische 8 am hakenförmigen Vorsprung 9 eine zur Grundkante 13a der Befestigungsausnehmung 13 im wesentlichen parallele Widerlagerkante für den Spreizfinger gebildet ist.

Die Abmessungen der geschlossenen Halteöffnung 11 sind bezüglich den Abmessungen der Führungslasche 4 derart, daß die Führungslasche 4 ein gewisses Spiel 16 in Lagerumfangsrichtung und ein geringes in Axialrichtung des Lagers in der geschlossenen Halteöffnung hat. Ebenso sind die Abmessungen der Befestigungsausnehmung 13 und der Aufnahmenische 8 derart, daß die Befestigungslasche 5 und der Spreizfinger 6 in zusammengesetztem Zustand des Radial-Axial-Gleitlagers Spiel 17 haben.

Zum Zusammensetzen eines Radial-Axial-Gleitlagers in der Ausführungsform nach Figur 1 bis 4 wird zunächst das in dem in Figur 2 gezeigten Zustand befindliche Axiallagerteil 2 etwas schräg zur Stirnkante des Radiallagerteiles 3 eingesetzt und im Scheitelbereich mit der Führungslasche 4 in die geschlossene Halteöffnung 11 am Rand des Radiallagerteiles 3 eingeführt, bis der Widerlagerrand 15 auf die äußere Umfangsfläche des Radiallagerteiles 3 kommt. Sodann wird das Axiallagerteil 2 beigeschwenkt, so daß seine beiden Befestigungslaschen 5 und Spreizfinger 6 in die Befestigungsausnehmungen gelangen. Sodann werden die Spreizfinger 6 von der jeweiligen Befestigungslasche 5 abgespreizt und unter bleibender Biegeverformung in die entsprechende Aufnahmenische 8 eingeführt. Das Axiallagerteil 2 ist damit bleibend und sicher am Radiallagerteil 3 angebracht und hat durch das Spiel der Führungslasche 4 in der geschlossenen Halteöffnung 11 und das Spiel der Befestigungslaschen 5 in der Befestigungsausnehmung 13 und das Spiel der Spreizfinger 6 in den Aufnahmenischen 8 eine für die Montage und den Betrieb des Lagers geeignete Beweglichkeit gegenüber dem Radiallagerteil 3. Im Betrieb des Radial-Axial-Gleitlagers 1 auftretende Relativbewegungen des Axiallagerteiles 2 gegenüber dem Radiallagerteil 3 können die vorgenommene Biegeverformung der Spreizfinger 6 nicht rückgängig machen, da die zur Grundkante 13a der Befestigungsausnehmung 13 parallele Anlagekante des hakenförmigen Vorsprunges 9 keinerlei Keilwirkung ausübt und im übrigen die Beweglichkeit des Axiallagerteiles 2 am Radiallagerteil 3 durch das vorgesehene Spiel 16 der Führungslasche 4 in der Halteöffnung 11 und der Befestigungslaschen 5 in den Befestigungsausnehmungen 13 begrenzt ist. Die Spreizfinger 6 dienen hierbei nur als Verbindungselement.

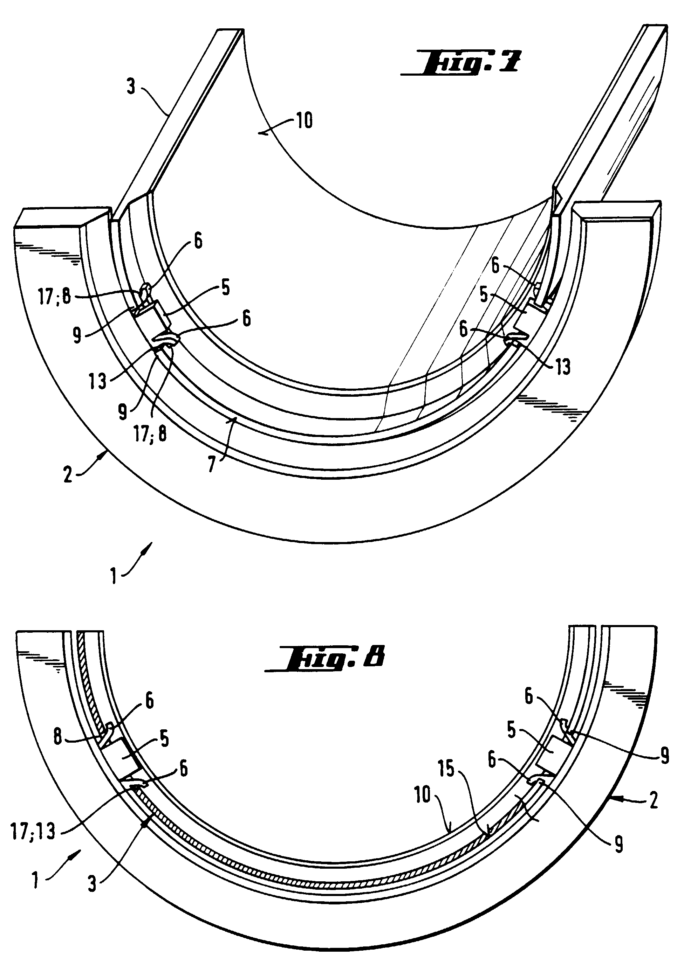

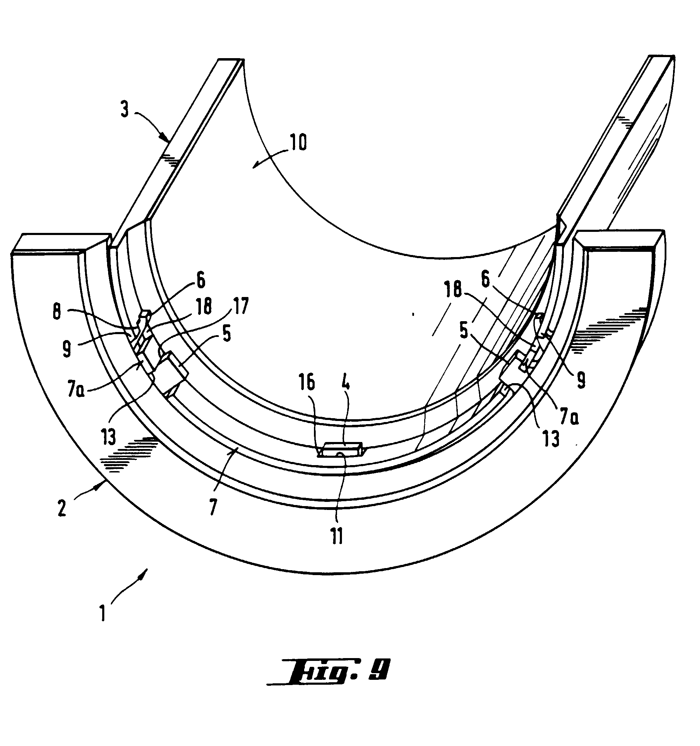

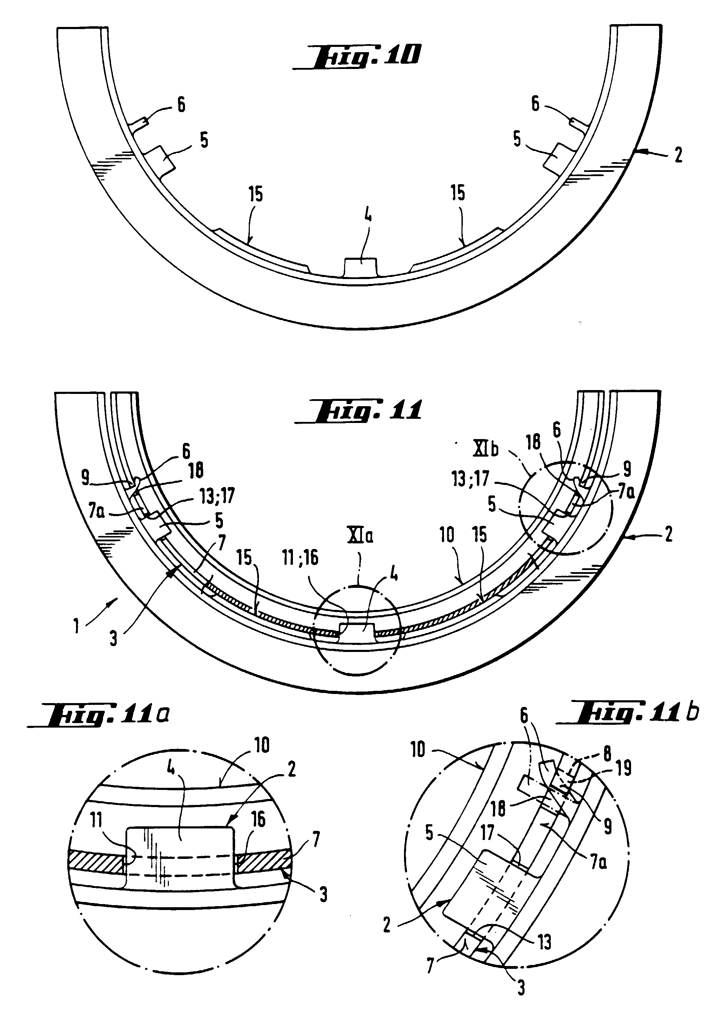

Bei der für spezielle Anwendungsfälle einzusetzenden Ausführungsform des Radial-Axial-Gleitlagers 1 nach Figur 5 und 6 hat das Axiallagerteil 2 nur zwei am Innenrand radial einwärts ragende Laschen, nämlich eine Führungslasche 4 und eine Befestigungslasche 5. Entsprechend ist im Randbereich 7 des Radiallagerteiles 3 eine geschlossene Halteöffnung 11 und eine axial offene Befestigungsausnehmung 13 angebracht. Für die Ausbildung der Aufnahmenische 8 und des hakenförmigen Vorsprunges 9 an der Befestigungsausnehmung 13 zum Einformen des Spreizfingers 6 sind die gleichen Merkmale vorgesehen, wie sie oben in Verbindung mit Figur 1 bis 4 erläutert sind. Gleiches gilt auch für das Spiel 16 der Führungslasche 4 in der Halteöffnung 11 und das Spiel 17 der Befestigungslasche 5 in der Befestigungsausnehmung 13.

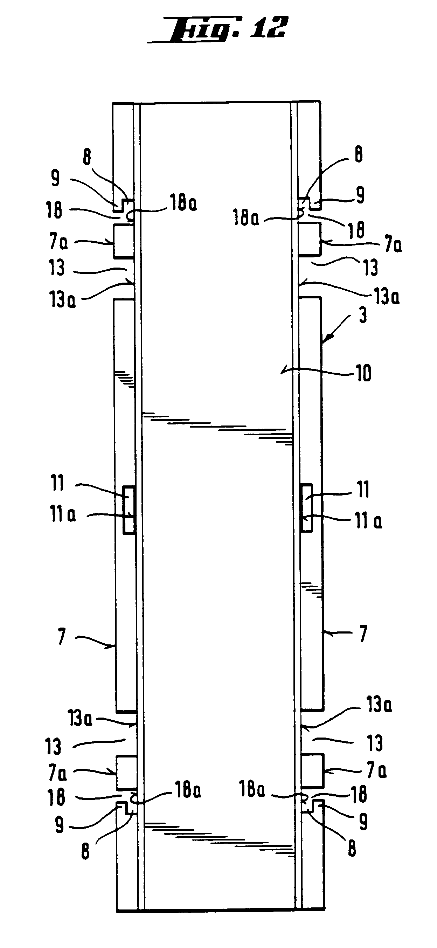

Eine weitere für spezielle Fälle einzusetzende Ausführungsform des Radial-Axial-Gleitlagers 1 ist in den Figuren 7 und 8 wiedergegeben. In diesem Fall hat das Axiallagerteil 2 zwei an seinem Innenrand radial einwärts vorstehende Laschen, die beide Befestigungslaschen 5 sind. Die Befestigungslaschen 5 sind in diesem Beispiel jeweils zu beiden Seiten von Spreizfingern 6 flankiert. Dementsprechend haben die im Rand 7 des Radiallagerteiles 3 angebrachten Befestigungsausnehmungen 13 im Unterschied zur Darstellung der Figur 4 nicht nur an einem Ende sondern an beiden Enden je eine Aufnahmenische, die jeweils von einem hakenförmigen Vorsprung überdeckt ist. Zum Zusammenbau des Radial-Axial-Gleitlagers werden beim Ansetzen des Axiallagerteiles 2 an das Radiallagerteil 3, die beiden Befestigungslaschen 5 des Axiallagerteiles 2 in die ihnen zugeordneten Befestigungsausnehmungen 13 des Radiallagerteiles 3 eingelegt. Sodann werden die Spreizfinger 6 nach beiden Seiten hin von der jeweiligen Befestigungslasche abgespreizt und in die jeweilige Aufnahmenische 8 bleibend eingebogen.

Bei allen Ausführungsbeispielen sind die Führungslaschen 4 und die Befestigungslaschen 5 sowie die Spreizfinger 6 derart ausgebildet, daß sie in zusammengebautem Zustand des Radial-Axial-Gleitlagers 1 unterhalb der Gleitfläche 10 des Radiallagerteiles 3 bleiben. Das Spiel 16 der Führungslasche 4 in der Halteöffnung 11 und das Spiel 17 der Befestigungslasche 5 in der Befestigungsausnehmung 13 ist wesentlich kleiner als die Abmessungen der Aufnahmenische 8 und des Spreizfingers 6. Das Spiel 16, 17 bietet eine definiert begrenzte gegenseitige Beweglichkeit von Radiallagerteil 3 und Axiallagerteil 2, jedoch wird trotz dieser Beweglichkeit sichergestellt, daß die Spreizfinger 6 immer und sicher in ihren Aufnahmenischen 8 verbleiben.

In den Figuren 9 bis 12 ist das Axiallagerteil mit einer mittigen Führungslasche 4 und dazu flankierend in einem Winkelabstand von etwa 30 Grad oder mehr mit zwei Haltelaschen 5 versehen. Zwischen der mittigen Führungslasche 4 und den flankierenden Haltelaschen 5 ist ein gegenüber dem Innenumfang des Axiallagerteiles 2 vorstehender Wiederlagerrand 15 gebildet. Die Führungslasche 4 greift in eine geschlossene Halteöffnung 11, während für die beiden Haltelaschen 5 Befestigungsausnehmungen 13 am Rand 7 des Radiallagerteiles 3 vorgesehen sind. Die Innenkante 11 a der geschlossenen Halteöffnung 11 und die Grundkante 13 a der Befestigungsausnehmungen 13 fluchten miteinander.

Wie besonders aus Figur 9 und 10 ersichtlich ist, ist jeder Haltelasche 5 an der der Führungslasche 4 abgewandten Seite ein Spreizfinger 6 zugeordnet, der in eine Spreizfingerausnehmung 18 eingreift. Die Befestigungsausnehmungen 13 und die Spreizfingerausnehmungen 18 sind über den Randabschnitt 7a voneinander getrennt.

Wie Figur 12 zeigt, weist jede der Spreizfingerausnehmungen 18 an ihrem der Befestigungsausnehmung 13 abgewandten Ende eine Aufnahmenische 8 auf, die axial nach außen durch einen hakenförmigen Vorsprung 9 überdeckt ist derart, daß in der Aufnahmenische 8 am hakenförmigen Vorsprung 9 eine zur Grundkante 18a der Spreizfingerausnehmung 18 im wesentlichen parallele Widerlagerkante für den Spreizfinger 6 gebildet ist.

Die Abmessungen der geschlossenen Halteöffnung 11 sind bezüglich den Abmessungen der Führungslasche 4 derart, daß die Führungslasche 4 ein gewisses Spiel 16 in Lagerumfangsrichtung und ein geringes in Axialrichtung des Lagers in der geschlossenen Halteöffnung hat. Ebenso sind die Abmessungen der Befestigungsausnehmung 13 und der Aufnahmenische 8 derart, daß die Haltelasche 5 und der Spreizfinger 6 in zusammengesetztem Zustand des Radial-Axial-Gleitlagers Spiel haben, wobei das Spiel 17 der Haltelasche 5 und das Spiel 16 der Führungslasche 4 geringer als das Spiel 19 des Spreizfingers ist (Figur 11b).

Zum Zusammensetzen eines Radial-Axial-Gleitlagers in der Ausführungsform nach Figur 9 bis 12 wird zunächst das in dem in Figur 2 gezeigten Zustand befindliche Axiallagerteil 2 etwas schräg zur Stirnkante des Radiallagerteiles 3 eingesetzt und im Scheitelbereich mit der Führungslasche 4 in die geschlossene Halteöffnung 11 am Rand des Radiallagerteiles 3 eingeführt, bis der Widerlagerrand 15 auf die äußere Umfangsfläche des Radiallagerteiles 3 kommt. Sodann wird das Axiallagerteil 2 beigeschwenkt, so daß seine beiden Haltelaschen 5 und Spreizfinger 6 in die jeweiligen Ausnehmungen gelangen. Sodann werden die Spreizfinger 6 abgespreizt und unter bleibender Biegeverformung in die entsprechende Aufnahmenische 8 eingeführt. Das Axiallagerteil 2 ist damit bleibend und sicher am Radiallagerteil 3 angebracht und hat durch das Spiel der Führungslasche 4 in der geschlossenen Halteöffnung 11 und das Spiel 17 der Haltelaschen 5 in der Befestigungsausnehmung 13 und das Spiel 19 der Spreizfinger 6 in den Aufnahmenischen 8 eine für die Montage und den Betrieb des Lagers geeignete Beweglichkeit gegenüber dem Radiallagerteil 3. Im Betrieb des Radial-Axial-Gleitlagers 1 auftretende Relativbewegungen des Axiallagerteiles 2 gegenüber dem Radiallagerteil 3 können die vorgenommene Biegeverformung der Spreizfinger 6 nicht rückgängig machen, da die zur Grundkante 18a der Spreizfingerausnehmung 18 parallele Anlagekante des hakenförmigen Vorsprunges 9 keinerlei Keilwirkung ausübt und im übrigen die Beweglichkeit des Axiallagerteiles 2 am Radiallagerteil 3 durch das vorgesehene Spiel 16 der Führungslasche 4 in der Halteöffnung 11 und der Haltelaschen 5 in den Befestigungsausnehmungen 13 begrenzt ist.

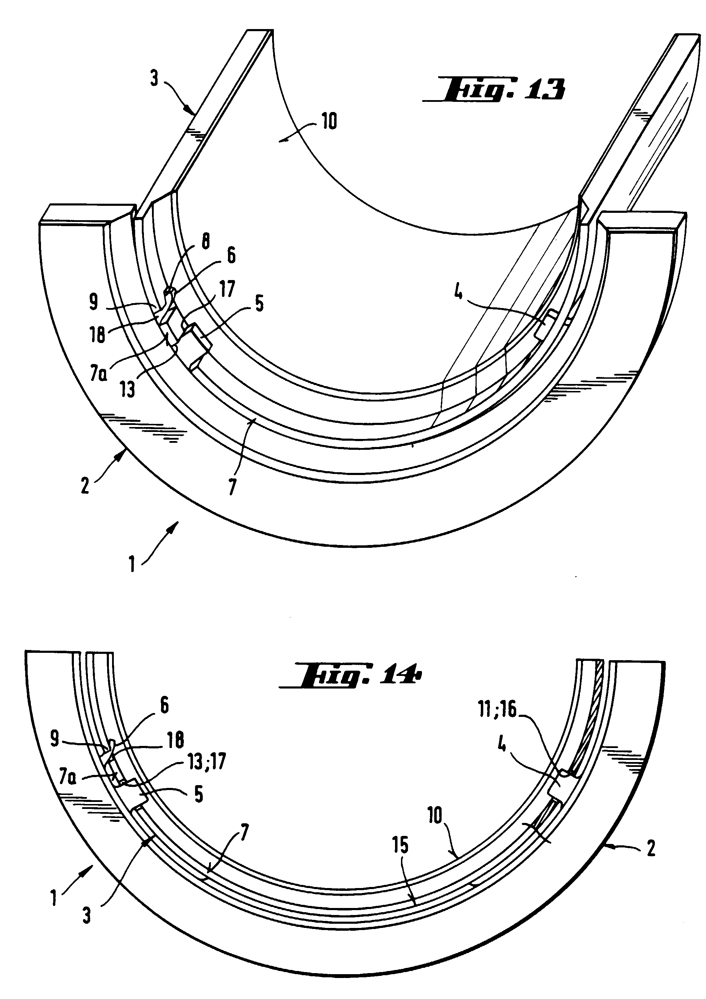

Bei der für spezielle Anwendungsfälle einzusetzenden Ausführungsform des Radial-Axial-Gleitlagers 1 nach Figur 13 und 14 hat das Axiallagerteil 2 nur zwei am Innenrand radial einwärts ragende Laschen, nämlich eine Führungslasche 4 und eine Haltelasche 5. Entsprechend ist im Randbereich 7 des Radiallagerteiles 3 eine geschlossene Halteöffnung 11 und eine axial offene Befestigungsausnehmung 13 sowie eine Spreizfingerausnehmung 18 angebracht. Für die Ausbildung der Aufnahmenische 8 und des hakenförmigen Vorsprunges 9 an der Spreizfingerausnehmung 18 zum Einformen des Spreizfingers 6 sind die gleichen Merkmale vorgesehen, wie sie oben in Verbindung mit Figur 9 bis 12 erläutert sind. Gleiches gilt auch für das Spiel 16 der Führungslasche 4 in der Halteöffnung 11 und das Spiel 17 der Haltelasche 5 in der Befestigungsausnehmung 13.

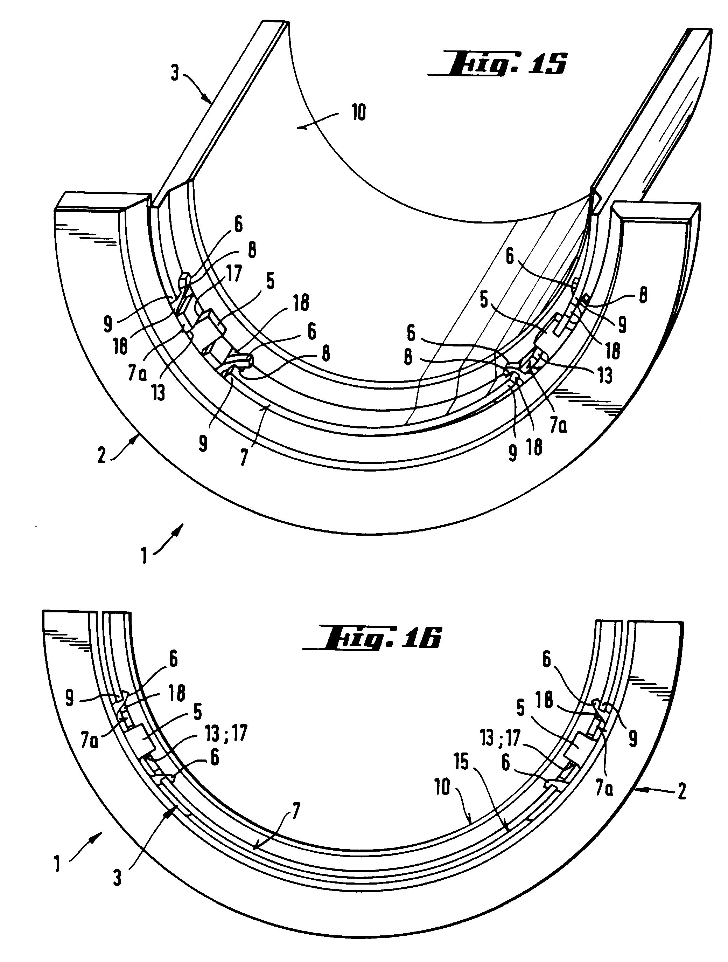

Eine weitere für spezielle Fälle einzusetzende Ausführungsform des Radial-Axial-Gleitlagers 1 ist in den Figuren 15 und 16 wiedergegeben. In diesem Fall hat das Axiallagerteil 2 zwei an seinem Innenrand radial einwärts vorstehende Laschen, die beide Haltelaschen 5 sind. Den Haltelaschen 5 sind in diesem Beispiel jeweils zu beiden Seiten Spreizfingern 6 zugeordnet. Dementsprechend sind im Rand 7 des Radiallagerteiles 3 vier Spreizfingerausnehmungen 18 vorgesehen, die je eine Aufnahmenische 8 aufweisen, die jeweils von einem hakenförmigen Vorsprung 9 überdeckt ist. Die beiden jeweiligen Haltelasche 5 zugeordneten Spreizfinger sind in entgegengesetzte Richtungen abgebogen. Je nach Ausbildung der Aufnahmenischen 8 können die Spreizfinger von der Haltelasche 5 weg oder zur Haltelasche 5 hin gebogen sein.

Zum Zusammenbau des Radial-Axial-Gleitlagers werden beim Ansetzen des Axiallagerteiles 2 an das Radiallagerteil 3, die beiden Haltelaschen 5 des Axiallagerteiles 2 in die ihnen zugeordneten Befestigungsausnehmungen 13 des Radiallagerteiles 3 eingelegt. Sodann werden die Spreizfinger 6 nach beiden Seiten hin abgespreizt und in die jeweilige Aufnahmenische 8 bleibend eingebogen.

Bei allen Ausführungsbeispielen sind die Führungslaschen 4 und die Haltelaschen 5 sowie die Spreizfinger 6 derart ausgebildet, daß sie in zusammengebautem Zustand des Radial-Axial-Gleitlagers 1 unterhalb der Gleitfläche 10 des Radiallagerteiles 3 bleiben. Das Spiel 16 der Führungslasche 4 in der Halteöffnung 11 und das Spiel 17 der Befestigungslasche 5 in der Befestigungsausnehmung 13 ist wesentlich kleiner als die Abmessungen der Aufnahmenische 8 und des Spreizfingers 6. Das Spiel 16, 17 bietet eine definiert begrenzte gegenseitige Beweglichkeit von Radiallagerteil 3 und Axiallagerteil 2, jedoch wird trotz dieser Beweglichkeit sichergestellt, daß die Spreizfinger 6 immer und sicher in ihren Aufnahmenischen 8 verbleiben.

### Bezugszeichenliste:

- 1: Radial-Axial-Gleitlager
- 2: Axiallagerteil
- 3: Radiallagerteil
- 4: Führungslasche
- 5: Haltelasche
- 6: Spreizfinger
- 7: Randbereich an Radiallagerteil
- 7a: Randabschnitt
- 8: Aufnahmenischen
- 9: Vorsprung
- 10: Gleitfläche des Radiallagerteiles
- 11: Halteöffnung
- 11a: Innenkante von 11
- 13: Befestigungsausnehmung
- 13a: Grundkante von 13
- 15: Widerlagerrand
- 16: Spiel
- 17: Spiel
- 18: Spreizfingerausnehmung
- 18a: Grundkante
- 19: Spiel

## Patentansprüche

1. Zusammengesetztes Radial-Axial-Gleitlager mit schalenförmigem oder buchsenförmigem Radiallagerteil (3) und einseitig oder beidseitig angesetztem, teilringförmigem Axiallagerteil (2) oder Satz von teilringförmigen Axiallagerteilen, wobei jedes Axiallagerteil mindestens zwei Haltelaschen an seiner inneren Umfangskante aufweist, die jeweils in eine im Bereich des bogenförmigen oder kreisförmigen Randes des Radiallagerteiles angebrachte Ausnehmung (13) eingreifen, wobei mindestens eine Haltelasche als Befestigungslasche (5) mit mindestens einem Spreizfinger (6) flankiert ist, der in eine in der zugeordneten Befestigungsausnehmung des Radiallagerteils gebildete Hinterschneidung (8) greift,
dadurch gekennzeichnet, daß
die Haltelaschen (5) in gegenseitigem Winkelabstand radial nach innen vorstehen und
daß die Hinterschneidung (8) durch einen am Rand der Befestigungsausnehmung (13) gebildeten hakenförmigen Vorsprung (9) in Axialrichtung des Radiallagerteiles (3) abgedeckt ist.

2. Gleitlager nach Anspruch 1, dadurch gekennzeichnet, daß der oder die Spreizfinger (6) in Umfangsrichtung des Axiallagerteiles (2) flankierend neben der Befestigungslasche (5) angeordnet und über deren gesamte radiale Länge durch einen Schnitt oder einen Schlitz von der Befestigungslasche (5) getrennt ist bzw. sind.

3. Gleitlager nach Anspruch 1 oder 2, dadurch gekennzeichnet, daß das Axiallagerteil (2) eine oder mehrere Haltelaschen als Führungslaschen (4) ohne Spreizfinger aufweist, welchen jeweils eine zumindest teilweise, vorzugsweise jedoch vollständig axial geschlossene Halteöffnung (11) am Rand (7) des Radiallagerteiles (3) zugeordnet ist.

4. Gleitlager nach Anspruch 3, dadurch gekennzeichnet, daß jedes Axiallagerteil (2) im Scheitelbereich seiner radialen Innenkante eine Führungslasche (4) und zu beiden Seiten in vorzugsweise gleichem Winkelabstand je eine Befestigungslasche (5) aufweist, wobei jede Befestigungslasche (5) zumindest an der von der Führungslasche (4) abgewandten Seite von einem Spreizfinger (6) flankiert ist.

5. Gleitlager nach Anspruch 4, dadurch gekennzeichnet, daß das Axiallagerteil (2) im Scheitelbereich seiner Innenkante mit einem radial einwärts gegenüber der Innenkante vorstehenden Widerlagerrand (15) ausgebildet ist, der sich zu beiden Seiten der Führungslasche (4) erstreckt.

6. Gleitlager nach einem der Ansprüche 1 bis 3, dadurch gekennzeichnet, daß das Axiallagerteil (2) zur einen Seite seines Scheitelbereiches in Winkelabstand davon eine Führungslasche (4) und zur anderen Seite des Scheitelbereiches in Winkelabstand eine Befestigungslasche (5) aufweist.

7. Gleitlager nach Anspruch 1 und 2, dadurch gekennzeichnet, daß das Axiallagerteil (2) zu beiden Seiten jeweils in Winkelabstand von seinem Scheitelbereich je eine Befestigungslasche (5) aufweist, der jeweils ein oder zwei Spreizfinger (6) zugeordnet ist bzw. sind.

8. Gleitlager nach Anspruch 6 oder 7, dadurch gekennzeichnet, daß der jeweiligen Befestigungslasche (5) ein Spreizfinger (6) zugeordnet ist, der vorzugsweise an der vom Scheitelbereich des Axiallagerteiles (2) abgewandten Seite der Befestigungslasche (5) angeordnet ist.

9. Gleitlager nach Anspruch 6 oder 7, dadurch gekennzeichnet, daß die Befestigungslasche (5) zu beiden Seiten von je einem Spreizfinger (6) flankiert ist, von welchen jeder in auseinandergespreiztem Zustand in eine Aufnahmenische (8) der die Befestigungslasche (5) aufnehmenden Befestigungsausnehmung (13) greift.

10. Zusammengesetztes Radial-Axial-Gleitlager mit schalenförmigem oder buchsenförmigem Radiallagerteil und einseitig oder beidseitig angesetztem, teilringförmigem Axiallagerteil oder Satz von teilringförmigen Axiallagerteilen, wobei jedes Axiallagerteil mindestens zwei in gegenseitigem Winkelabstand nach innen vorstehende Haltelaschen an seiner inneren Umfangskante aufweist, die jeweils in eine im Bereich des bogenförmigen oder kreisförmigen Randes des Radiallagerteiles angebrachte Ausnehmung eingreifen, sowie mindestens einen Spreizfinger aufweist,
dadurch gekennzeichnet,
daß die Haltelaschen (5) im gegenseitigen Winkelabstand radial nach innen vorstehen,
daß der Spreizfinger (6) beabstandet zur Haltelasche (5) angeordnet und in eine eigene Spreizfingerausnehmung (18) im Bereich des bogenförmigen oder kreisförmigen Randes (7) des Radiallagerteiles (3) eingreift, wobei die Spreizfingerausnehmung (18) eine Hinterschneidung aufweist, die durch einen am Rand der Spreizfingerausnehmung (18) gebildeten hakenförmigen Vorsprung (9) in Axialrichtung des Radiallagerteils (3) abgedeckt ist.

11. Gleitlager nach Anspruch 10, dadurch gekennzeichnet, daß der Spreizfinger (6) mit einem größeren Spiel (19) in der Spreizfingerausnehmung (18) angeordnet ist als die Haltelaschen (5) in der ihr zugeordneten Befestigungsausnehmung (13).

12. Gleitlager nach Anspruch 10 oder 11, dadurch gekennzeichnet, daß der oder die Spreizfinger (6) auf einer oder beiden Seiten der Haltelasche (5) beabstandet zu dieser angeordnet sind.

13. Gleitlager nach einem der Ansprüche 10 bis 12, dadurch gekennzeichnet, daß das Axiallagerteil (2) eine oder mehrere Haltelaschen als Führungslaschen (4) aufweist, denen jeweils eine zumindest teilweise, vorzugsweise jedoch vollständig axial geschlossene Halteöffnung (11) am Rand (7) des Radiallagerteils (3) zugeordnet ist.

14. Gleitlager nach Anspruch 13, dadurch gekennzeichnet, daß jedes Axiallagerteil (2) im Scheitelbereich seiner radialen Innenkante eine Führungslasche (4) und zu beiden Seiten in vorzugsweise gleichem Winkelabstand je eine Haltelasche (5) aufweist, wobei beabstandet zu jeder Haltelasche (5) zumindest an der von der Führungslasche (4) abgewandten Seite ein Spreizfinger (6) vorgesehen ist.

15. Gleitlager nach Anspruch 14, dadurch gekennzeichnet, daß das Axiallagerteil (2) im Scheitelbereiches seiner Innenkante mit einem radial einwärts gegenüber der Innenkante vorstehenden Widerlagerrand (15) ausgebildet ist, der sich zu beiden Seiten der Führungslasche (4) erstreckt.

16. Gleitlager nach einem der Ansprüche 10 bis 15, dadurch gekennzeichnet, daß das Axiallagerteil (2) zur einen Seite seines Scheitelbereiches in Winkelabstand davon eine Führungslasche (4) und zur anderen Seite des Scheitelbereiches in Winkelabstand eine Haltelasche (5) aufweist, wobei beabstandet zu der Haltelasche (4, 5) mindestens ein Spreizfinger (6) vorgesehen ist.

17. Gleitlager nach einem der Ansprüche 10 bis 12, dadurch gekennzeichnet, daß das Axiallagerteil (2) zu beiden Seiten jeweils im Winkelabstand von seinem Scheitelbereich je eine Haltelasche (5) aufweist, der jeweils ein oder zwei Spreizfinger (6) zugeordnet ist bzw. sind.

18. Gleitlager nach einem der Ansprüche 10 bis 17, dadurch gekennzeichnet, daß in der Spreizfingerausnehmung (18) zwei Spreizfinger (6) eingreifen, wobei jeder Spreizfinger (6) in gespreiztem Zustand in eine eigene Aufnahmenische (8) greift.

## Claims

1. Composite radial-axial plain bearing comprising a radial part (3) in the form of a shell or bush and a part-annular axial part (2) or a set of part-annular axial parts situated on one or both sides of the radial part, wherein every axial part has on its inner peripheral rim at least two holding stubs each of which engages into a respective recess (13) situated in the region of the arcuate or circular rim of the radial part, wherein at least one holding stub acting as a retaining stub is flanked with at least one spreader pin (6) which engages into an indentation (8) formed in the associated retaining recess of the radial part, characterised in that the holdning stubs (5) project radially inwardly at a mutually opposite angular distance, and that the indentation (8) is covered in axial direction of the radial part (3) by a hook-shaped projection (9) formed on the rim of the retaining recess (13).

2. A plain bearing according to Claim 1, characterised in that the spreader pin or pins (6) is/are arranged in peripheral direction of the axial part (2) of the bearing next to the retaining stub (5) and is/are separated along its/their whole radial length by a cut or notch from the retaining notch (5).

3. Plain bearing according to Claim 1 or 2, characterised in that the axial part (2) comprises one or more holding stubs as guiding stubs (4) without spreader pins, with each of which is associated a receiving hole (11) which is at least partially, preferably fully axially closed and is made on the rim (7) of the radial part (3).

4. Plain bearing according to Claim 3, characterised in that every axial part (2) has in the apex region of its radial inner edge a guiding stub (4) and on both sides, preferably at the same angular distance, a retaining stub (5), wherein every retaining stub (5) is at least on the side facing away from the guiding stub (4) flanked by a spreader pin (6).

5. Plain bearing according to Claim 4, characterised in that the axial part (2) of the bearing has in the apex region of its radial inner edge a support rim (15) projecting radially inwardly with respect to the inner edge, the support edge extending on both sides of the guiding stub (4).

6. Plain bearing according to any one of Claims 1 to 3, characterised in that the axial part (2) has on one side of its apex region, at an angular distance therefrom a guiding stub (4), and on the other side of the apex region at an angular distance a retaining stub (5).

7. Plain bearing according to Claims 1 and 2, characterised in that the axial part (2) has on both sides, in each case at an angular distance from its apex region, a retaining stub (5), each of which is associated with one or two spreader pins (6).

8. Plain bearing according to Claim 6 or 7, characterised in that each retaining stub (5) is associated with a spreader pin (6) which is preferably arranged on the side of the retaining stub (5) facing away from the apex region of the axial part (2).

9. Plain bearing according to Claim 6 or 7, characterised in that the retaining stub (5) is flanked on both sides by a spreader pin (6), each of the spreader pins engaging in a deflected state in an engagement niche (8) of the retaining recess (13) which receives the retaining stub (5).

10. Composite radial-axial plain bearing comprising a radial part in the form of a shell or bush and a part-annular axial part or a set of part-annular axial parts situated on one or both sides of the radial part, wherein every axial part has on its inner peripheral rim at least two holding stubs, projecting inwardly at a mutual angular distance, each of which engages into a respective recess situated in the region of the arcuate or circular rim of the radial part, and also at least one spreader pin, characterised in that the holding stubs (5) project radially inwardly at a mutually opposite angular distance, that the spreader pin (6) is spaced from the holding stub (5) and engages into its own recess (18) in the region of the arcuate or circular rim (7) of the radial part (3), wherein the recess (18) for the spreader pin includes an indentation which is covered in axial direction of the radial part (3) by a hook-shaped projection (9) formed on the rim of the recess (18) for the spreader pin.

11. Plain bearing according to Claim 10, characterised in that the spreader pin (6) is situated in its recess (18) with a clearance (19) which is greater than that of the holding stub (5) in the retaining recess (13) associated therewith.

12. Plain bearing according to Claim 10 or 11, characterised in that the spreader pin or pins (6) are arranged on one or both sides of the holding stub (5) spaced therefrom.

13. Plain bearing according to any one of Claims 10 to 12, characterised in that the axial part (2) of the bearing comprises one or more holding stubs as guiding stubs (4) for each of which is provided on the rim (7) of the radial part (3) of the bearing a receiving hole (11) which is at least partly but preferably fully axially closed.

14. Plain bearing according to Claim 13, characterised in that every axial part (2) has in the apex region of its radial inner edge a guiding stub (4) and on both sides, preferably at the same angular distance, a holding stub (5), wherein every holding stub (5) has, at least on the side facing away from the guiding stub (4), a spreader pin (6) which is spaced therefrom.

15. Plain bearing according to Claim 14, characterised in that the axial part (2) is in the apex region of its inner edge provided with a support rim (15) projecting radially inwardly with respect to the inner edge, the support rim extending on both sides of the guiding stub (4).

16. Plain bearing according to any one of Claims 10 to 15, characterised in that the axial part (2) has, on one side of its apex region, at an angular distance therefrom, a guiding stub (4) and on the other side of the apex region, at an angular distance, a holding stub (5), wherein at least one spreader pin (6) is provided spaced from the holding stub (4,5).

17. Plain bearing according to any one of Claims 10 to 12, characterised in that the axial part (2) has on both sides, in each case at an angular distance from its apex region, a holding stub (5) with which is/are associated one or two spreader pin(s) (6).

18. Plain bearing according to any one of Claim 10 to 17, characterised in that two spreader pins (6) engage in the recess (18) for spreader pins, each spreader pin (6) engageing in deflected state in its own engagement niche (8).

## Revendications

1. Palier lisse radial et de butée composé, comprenant une pièce en forme de coquille ou de douille constituant une partie palier radial (3) et une pièce ou un jeu de pièces en forme de partie d'anneau qui y est rapporté d'un ou des deux côtés et constitue une partie butée, dont chaque partie butée présente au moins deux pattes de maintien sur son bord périphérique intérieur, qui pénètrent chacune dans un évidement (13) ménagé dans la zone du bord en forme d'arc ou circulaire de la partie palier radial, au moins une patte de maintien, servant de patte de fixation (5), étant flanquée d'au moins un doigt écartable (6) qui s'engage dans un élargissement intérieur (8) formé dans l'évidement de fixation coordonné de la partie palier radial, caractérisé en ce
que les pattes de maintien (5) font radialement saillie vers l'intérieur avec un espacement angulaire mutuel et que l'élargissement intérieur (8) est recouvert, dans la direction axiale de la partie palier radial (3), par une saillie (9) en forme de crochet réalisée sur le bord de l'évidement de fixation (13).

2. Palier lisse selon la revendication 1, caractérisé en ce que le ou les doigts écartables (6) sont disposés à côté de la patte de fixation (5) de manière qu'elle soit flanquée d'eux dans la direction périphérique de la partie butée (2) et le ou les doigts est ou sont séparé(s) de la patte de fixation (5) par une coupe ou une fente s'étendant sur toute leur longueur radiale.

3. Palier lisse selon la revendication 1 ou 2, caractérisé en ce que la partie butée (2) présente une ou plusieurs pattes de maintien servant de pattes de guidage (4), sans doigt écartable, à chacune desquelles est coordonnée une ouverture de maintien (11) fermée axialement au moins en partie, mais de préférence complètement, sur le bord (7) de la partie palier radial (3).

4. Palier lisse selon la revendication 3, caractérisé en ce que chaque partie butée (2) présente une patte de guidage (4) dans la zone du sommet de son bord radialement intérieur et, des deux côtés de cette patte, de préférence à un espacement angulaire égal, une patte de fixation (5), chaque patte de fixation (5) étant flanquée d'un doigt écartable (6), au moins du côté éloigné de la patte de guidage (4).

5. Palier lisse selon la revendication 4, caractérisé en ce que la partie butée (2) est munie, dans la zone du sommet de son bord intérieur, d'un rebord de contre-appui (15) qui fait radialement saillie vers l'intérieur par rapport au bord intérieur et s'étend des deux côtés de la patte de guidage (4).

6. Palier lisse selon une des revendications 1 à 3, caractérisé en ce que la partie butée (2) présente une patte de guidage (4) d'un côté de la zone de son sommet, à distance angulaire de celle-ci, et une patte de fixation (5) de l'autre côté de cette zone, également à distance angulaire d'elle.

7. Palier lisse selon les revendications 1 et 2, caractérisé en ce que la partie butée (2) présente, des deux côtés de sa zone de sommet, avec un espacement angulaire de celle-ci, une patte de fixation (5) à laquelle est ou sont coordonné(s) un ou deux doigts écartables (6).

8. Palier lisse selon la revendication 6 ou 7, caractérisé en ce que le doigt écartable (6) coordonné à la patte de fixation (5), est disposé de préférence du côté de cette patte éloigné de la zone de sommet de la partie butée (2).

9. Palier lisse selon la revendication 6 ou 7, caractérisé en ce que la patte de fixation (5) est flanquée des deux côtés d'un doigt (6) qui, à l'état écarté, est engagé dans un élargissement intérieur ou rentrant récepteur (8) de l'évidement de fixation (13) recevant la patte de fixation (5).

10. Palier lisse radial et de butée composé, comprenant une pièce en forme de coquille ou de douille constituant une partie palier radial et une pièce ou un jeu de pièces en forme de partie d'anneau qui y est rapporté d'un ou des deux côtés et constitue une partie butée, dont chaque partie butée présente, sur son bord périphérique intérieur, au moins deux pattes de maintien qui dépassent vers l'intérieur avec un espacement angulaire mutuel et pénètrent chacune dans un évidement ménagé dans la zone du bord en arc ou circulaire de la partie palier radial, ainsi qu'au moins un doigt écartable,
caractérisé en ce
que les pattes de maintien (5) font radialement saillie vers l'intérieur avec un espacement angulaire mutuel et que le doigt écartable (6) est disposé à distance de la patte de maintien (5) et pénètre dans un évidement de doigt (18) qui lui est propre dans la zone du bord (7) en arc ou circulaire de la partie palier radial (3), l'évidement de doigt (18) présentant un élargissement intérieur ou rentrant qui est recouvert, en direction axiale de la partie palier radial (3), par une saillie (9) en forme de crochet réalisée sur le bord de l'évidement de doigt (18).

11. Palier lisse selon la revendication 10, caractérisé en ce que le doigt (6) est disposé avec un plus grand jeu (19) dans l'évidement de doigt (18) que les pattes de maintien (5) dans l'évidement de fixation (13) qui leur est coordonné.

12. Palier lisse selon la revendication 10 ou 11, caractérisé en ce que le ou les doigt(s) (6) est ou sont disposé(s) d'un ou des deux côtés de la patte de maintien (5), à distance de celle-ci.

13. Palier lisse selon une des revendications 10 à 12, caractérisé en ce que la partie butée (2) présente une ou plusieurs pattes de maintien servant de pattes de guidage (4), à chacune desquelles est coordonnée une ouverture de maintien (11) qui est axialement fermée au moins en partie, mais de préférence complètement, sur le bord (7) de la partie palier radial (3).

14. Palier lisse selon la revendication 13, caractérisé en ce que chaque partie butée (2) présente une patte de guidage (4) dans la zone du sommet de son bord radialement intérieur et, des deux côtés de celle-ci, de préférence à la même distance angulaire, une patte de maintien (5), avec prévision d'un doigt écartable (6) à distance de chaque patte de maintien (5), au moins du côté éloigné de la patte de guidage (4).

15. Palier lisse selon la revendication 14, caractérisé en ce que la partie butée (2) est munie, dans la zone du sommet de son bord intérieur, d'un rebord de contre-appui (15) qui fait radialement saillie vers l'intérieur par rapport au bord intérieur et s'étend des deux côtés de la patte de guidage (4).

16. Palier lisse selon une des revendications 10 à 15, caractérisé en ce que la partie butée (2) présente une patte de guidage (4) d'un côté de la zone de son sommet, à distance angulaire de celle-ci, et une patte de maintien (5) de l'autre côté de cette zone, également à distance angulaire d'elle, avec prévision d'au moins un doigt écartable (6) à distance de la patte de maintien (5).

17. Palier lisse selon une des revendications 10 à 12, caractérisé en ce que la partie butée (2) présente une patte de maintien (5) des deux côtés de la zone de son sommet, chaque fois à distance angulaire de cette zone, à chacune desquelles est ou sont coordonné(s) un ou deux doigts écartables (6).

18. Palier lisse selon une des revendications 10 à 17, caractérisé en ce que deux doigts (6) pénètrent dans l'évidement de doigt (18), chaque doigt (6) étant engagé, à l'état écarté, dans un rentrant récepteur (8) qui lui est propre.
